# EUROPEAN PATENT APPLICATION

(11) **EP 0 854 426 A2**
(43) Date of publication of application: **22.07.1998**
(21) Application number: 97310712.1
(22) Date of filing: 31.12.1997
(51) Int. Cl.: G06F 11/32, G06F 11/26

(54) **Apparatus and method for analyzing electronic circuit and storage device storing electronic circuit analysis program**

(30) Priority: 16.01.1997 JP 5130/97
(71) Applicant: TEIJIN SEIKI COMPANY LIMITED, Osaka (JP)
(72) Inventor: Chiba, Takahiro, c/o Teijin Seiki Co., Ltd., Tarui-cho, Fuwa-gun, Gifu (JP)
(74) Representative: Pacitti, Pierpaolo A.M.E.

(57) **Abstract**

Herein disclosed is an electronic circuit analysis apparatus (1) for analyzing an electronic circuit (3) having a plurality of components (30, 32, 34, 36, 38, 40, 42, 44, 46, 48). The apparatus (1) comprises examination means (10, 5), visualizing means (10, 15) and interactive operation means (10, 15, 17). The examination means (10, 5) is designed to examine the electronic circuit (3) to detect the components (30, 32, 34, 36, 38, 40, 42, 44, 46, 48) of the electronic circuit (3). The visualization means (10, 15) is designed to graphically visualize information on the configuration of the electronic circuit (3) in accordance with the components (30, 32, 34, 36, 38, 40, 42, 44, 46, 48) detected by the examination means (10, 5). The interactive operation means (10, 15, 17) allows an operator to set the component in accordance with the visualized information (410, 420a, 420b, 420c, 420d, 430, 440). The present invention enables the operator to easily set the components (30, 32, 34, 36, 38, 40, 42, 44, 46, 48) of the electronic circuit (3) without especial skill in the art.

## Description

### BACKGROUND OF THE INVENTION

### 1. Field of the Invention

The present invention relates to an apparatus for and a method of analyzing an electronic circuit having a plurality of components, and a storage device storing therein an electronic circuit analysis program for analyzing the electronic circuit.

### 2. Description of the Related Art

There have so far been proposed various types of electronic circuits each comprising a central processing unit (CPU), a read only memory (ROM), a random access memory (RAM), an input-output unit (I/O) and a target program which is stored in an electronically erasable and programmable ROM (EEPROM) to be executed by its CPU to achieve various functions. In the development of the electronic circuit, it is essential for the electronic circuit to be analyzed by using a support system, such as an in-circuit emulator (hereinlater referred to simply as "ICE") or a ROM debugger.

The conventional ICE comprises an emulation CPU, a pod, a storage device and predetermined debugging software. The storage device of the ICE has an emulation area assigned to the ROM, the RAM, and the I/O of the electronic circuit. The electronic circuit is analyzed by the ICE in the following way. First, the CPU of the electronic circuit is unplugged from a CPU socket of the electronic circuit. Then, the pod of the ICE is plugged into the CPU socket of the electronic circuit instead of the CPU of the electronic circuit, so that the emulation CPU of the ICE is connected to the electronic circuit through the pod of the ICE. The ICE thus constructed can emulate the operations of the CPU of the electronic circuit by executing the debugger software, and achieve the analysis of the electronic circuit in respect of hardware and software by tracing and monitoring the operations of the electronic circuit.

The ROM debugger comprises a pod, a storage device and a control unit. The pod of the ROM debugger is plugged into an EEPROM socket of the electronic circuit instead of the EEPROM of the electronic circuit. The storage device of the ROM debugger has an emulation area assigned to the ROM of the electronic circuit. The target program of the electronic circuit is loaded and stored in the emulation area of the storage device of the ROM debugger. The ROM debugger thus constructed can analyze the target program of the electronic circuit.

The conventional support system and the electronic circuit are generally initialized before the analysis of the electronic circuit. However, the initialization processes of the electronic circuit and the support system are awfully complicated, because of the fact that the electronic circuit has extremely complex components to be respectively initialized. Therefore, there have been proposed various manners of the initialization processes which will be described hereinlater.

When each of the components of the electronic circuit has registers to be set by the support system, the operator may enter commands into the support system to assign a name to each register of each component of the electronic circuit and to set each register as described below.
OHPL = 78(H)
OHPH = 56(H)

Alternatively, the operator may enter commands into the support system to specify an address corresponding to each register of each component of the electronic circuit and to set each register as follows:
5FFF0 = 78(H)
5FFF1 = 56(H)

Furthermore alternatively, the operator may write a program for performing the initialization in the assembly language as described below.
MOV DX, FFFE
MOV AX, 5
OUT DX, AX

However, a drawback encountered in a prior art support system of the above described nature is that it is difficult for the operator, who is unskilled with the support system and has a poor knowledge of the advanced electronic circuit having extremely complex structures, to perform the analyses of the electronic circuit. Moreover, the operator must be familiar with all of commands and operations each being depending upon an individual architecture of the support system and the electronic circuit to handle the support system. Furthermore, the program for initializing the support system and the electronic circuit has an enormous size, so that it will take a lot of time to prepare the support system for analyzing the electronic circuit, even if the operator is skilled in the art.

### SUMMARY OF THE INVENTION

It is an object of the present invention to provide an electronic circuit analysis apparatus for analyzing an electronic circuit having a plurality of components and enabling the operator to easily set the components of the electronic circuit without especial skill in the art.

It is another object of the present invention to provide an electronic circuit analysis method of analyzing an electronic circuit having a plurality of components and enabling the operator to easily set the components of the electronic circuit without especial skill in the art.

It is a further object of the present invention to provide a program storage device storing an analysis program for analyzing an electronic circuit having a plurality of components and enabling the operator to easily set the components of the electronic circuit without especial skill in the art.

In accordance with a first aspect of the present invention, there is provided an electronic circuit analysis apparatus for analyzing an electronic circuit having a plurality of components. The electronic circuit analysis apparatus comprises: examination means for examining the electronic circuit to detect the components of the electronic circuit; and visualization means for graphically visualizing information on the configuration of the electronic circuit in accordance with the components detected by the examination means.

The electronic circuit analysis apparatus may further comprise: a storage device storing therein predetermined information file including information on various components of an electronic circuit; and means for retrieving information concerning the components detected by the examination means from the information file.

The visualization means of the electronic circuit analysis apparatus may comprise a display unit for displaying the information on its screen. The information on the screen of the display unit is represented by a block diagram showing the configuration of the electronic circuit and further represented by detailed information lists indicating detailed information on the components of the electronic circuit.

The block diagram may have graphic symbols representing the components detected by the examination means. The apparatus may further comprise interactive operation means for allowing an operator to select at least one from among the graphic symbols shown in the block diagram to set the component corresponding to the selected graphic symbol. The display unit displays the detailed information list which indicates the detailed information on the component of the electronic circuit corresponding to the graphic symbol selected by the operator.

The electronic circuit analysis apparatus may further comprise a storage device having a target area assigned to the components of the electronic circuit. The information on the screen of the display unit is represented by an address map showing the assignment of the target area of the storage device. The apparatus may further comprises interactive operation means for allowing an operator to define addresses corresponding to the components of the electronic circuit detected by the examination means in accordance with the address map. Alternatively, the detailed information lists may represent contents of registers corresponding to the components detected by the examination means.

The electronic circuit analysis apparatus may further comprise a general purpose computer and an analysis unit interposed between the computer and the electronic circuit. The computer is operable to directly control the analysis unit and control the electronic circuit by way of the analysis unit. The analysis unit of the electronic circuit analysis apparatus may an in-circuit emulator. The analysis unit of the electronic circuit analysis apparatus may a ROM debugger.

In accordance with a second aspect of the present invention, there is provided an electronic circuit analysis method of analyzing an electronic circuit having a plurality of components. The electronic circuit analysis method comprises the steps of:
(a) examining the electronic circuit to detect the components of the electronic circuit; and
(b) graphically visualizing information on the configuration of the electronic circuit in accordance with the components detected in the step (a).
   The electronic circuit analysis method may further comprise the step of preparing a predetermined information file including information on various components of an electronic circuit. The step (b) may comprise the step of retrieving the information concerning the components detected in the step (a) from the information file.
   The electronic circuit analysis method may further comprise the steps of:
(c) displaying a block diagram showing the configuration of the electronic circuit based on the components detected in the step (a), the block diagram having graphic symbols representing the components detected in the step (a):
(d) allowing an operator to select at least one from among the graphic symbols shown in the block diagram;
(e) displaying a detailed information list indicating detailed information on the component of the electronic circuit corresponding to the graphic symbol selected by the operator in the step (d); and
(f) allowing the operator to set the component corresponding to the selected graphic symbol in accordance with the detailed information list.

The detailed information lists may represent contents of registers corresponding to the components of the electronic circuit.

The electronic circuit analysis method may further comprise the steps of:
preparing a storage device having a target area assigned to the components of the electronic circuit;
displaying an address map showing the assignment of the target area of the storage device; and
allowing an operator to define addresses corresponding to the components of the electronic circuit detected in the step (a) in accordance with the address map.

In accordance with a third aspect of the present invention, there is provided a storage device storing therein an electronic circuit analysis program executed by a computer to perform a method of analyzing an electronic circuit. The method comprises the steps of:
(a) examining the electronic circuit to detect the components of the electronic circuit; and
(b) graphically visualizing information on the configuration of the electronic circuit in accordance with the components detected in the step (a).
   The storage device may further store therein a predetermined information file including information on various components of an electronic circuit. The step (b) of the method may further comprise the step of retrieving the information concerning the components detected in the step (a) from the information file.
   The method may further comprise the steps of:
(c) displaying a block diagram showing the configuration of the electronic circuit, the block diagram having graphic symbols representing the components detected in the step (a);
(d) allowing an operator to select at least one from among the graphic symbols shown in the block diagram;
(e) displaying a detailed information list indicating detailed information on the component of the electronic circuit corresponding to the graphic symbol selected by the operator in the step (d); and
(f) allowing the operator to set the component corresponding to the selected graphic symbol in accordance with the detailed information list.

The detailed information lists may represent contents of registers corresponding to the components of the electronic circuit.

The computer may be connected to a storage device having a target area assigned to the components of the electronic circuit. The method may further comprise the steps of:
displaying an address map showing the assignment of the target area of the storage device; and
allowing the operator to define addresses corresponding to the components detected in the step (a) in accordance with the address map.

### BRIEF DESCRIPTION OF THE DRAWINGS

The present invention and many of the attendant advantages thereof will be better understood from the following detailed description when considered in connection with the accompanying drawings, wherein:
FIG. 1 is a block diagram showing an embodiment of an electronic circuit analysis apparatus according to the present invention;
FIG. 2 is a block diagram showing an overall outline flow of the processes performed by executing a program in the electronic circuit analysis apparatus shown in FIG. 1;
FIG. 3 is a flowchart showing a flow of a main routine of the program shown in FIG. 2;
FIG. 4 is a flowchart showing a flow of the steps of a descriptive procedure shown in FIG. 3;
FIG. 5 is a flowchart showing a flow of the steps of the CPU information routine shown in FIG. 4;
FIG. 6 is an example view of a CPU block diagram window displayed in the step C3 in FIG. 5;
FIG. 7 is an example view of a detailed information list window displayed in the step C5 in FIG. 5;
FIG. 8 is a flowchart showing a flow of the steps of the memory information routine shown in FIG. 4;
FIG. 9 is an example view of an address map window displayed in the step D3 in FIG. 8 before the operator enters data; and
FIG. 10 is an example view of the address map window after the operator entered data into the cells in the step D6 in FIG. 8.

### DESCRIPTION OF THE PREFERRED EMBODIMENTS

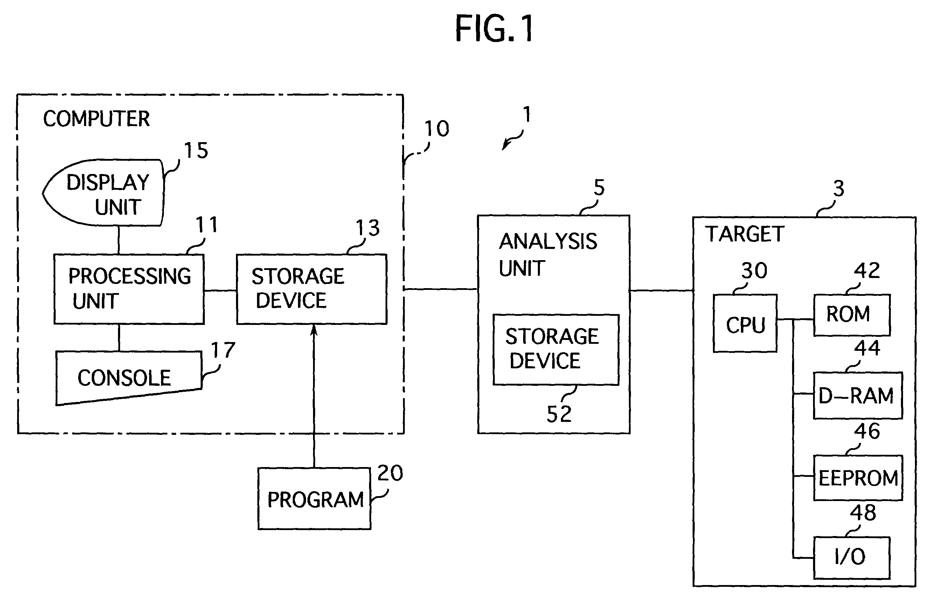

Throughout the following detailed description, identical reference characters refer to identical elements in all figures of the drawings. Referring to FIGS. 1 to 10 of the drawings, there is shown a preferred embodiment of an electronic circuit analysis apparatus according to the present invention.

The electronic circuit analysis apparatus denoted by reference numeral "1" shown in FIG. 1, and is designed to perform an analysis of an electronic circuit represented as a target 3. The electronic circuit analysis apparatus 1 comprises a general purpose computer 10, such as a personal computer and a workstation, and an analysis unit 5 interposed between the computer 10 and the target 3. The computer 10 comprises a processing unit 11, a storage device 13, a display unit 15 and a console 17. The processing unit 11 executes a predetermined program 20 loaded into the storage device 13 to perform the analysis of the target 3. The computer 10 instructs the analysis unit 5 to analyze the target 3 and receive information on the target 3 from the analysis unit 5. The display unit 15 is operated to display the information on its screen and serves as visualization means for graphically visualizing the information. The console 17 includes, but not limited to, a keyboard, a mouse and the other input units which are not shown at all and allows an operator to enter data into the computer 10. The display unit 15 and the console 17 integrally serve as a user interface between the computer 10 and the operator for interactive operations.

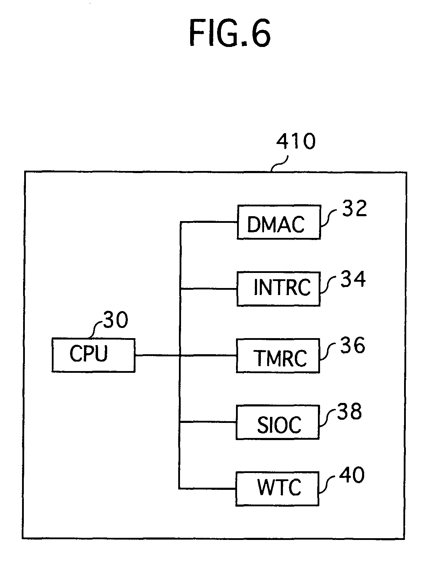

The target 3 has a plurality of components, e.g., a CPU 30, a ROM 42, a dynamic RAM (hereinlater referred to simply as "D-RAM") 44, an EEPROM 46 and an I/O 48. The ROM 42 has a memory capacity of 512K bytes. The D-RAM 44 has a memory capacity of 256K bytes. The EEPROM 46 has a memory capacity of 32K bytes in the even bytes. More specifically shown in FIG. 6, the CPU 30 of the target 3 comprises a direct memory access controller (DMAC) 32, an interrupt controller (INTRC) 34, a timer controller (TMRC) 36, an serial I/O controller (SIOC) 38 and a CPU wait controller (WTC) 40. The CPU 30, DMAC 32, the INTRC 34, the TMRC 36, the SIOC 38 and the WTC 40 are integrally assembled into an one-chip micro processing unit.

The analysis unit 5 comprises a storage device 52 having a target area assigned to the components of the target 3, i.e. the ROM 42, the D-RAM 44, the EEPROM 46 and the I/O 48. The analysis unit 5 is directly controlled by the computer 10 to analyze the target 3 in accordance with the instructions from the computer 10. The computer 10 and the analysis unit 5 as a whole serve as examination means for examining the target 3 to detect the components of the target 3 and obtain the information on the configuration of the target 3.

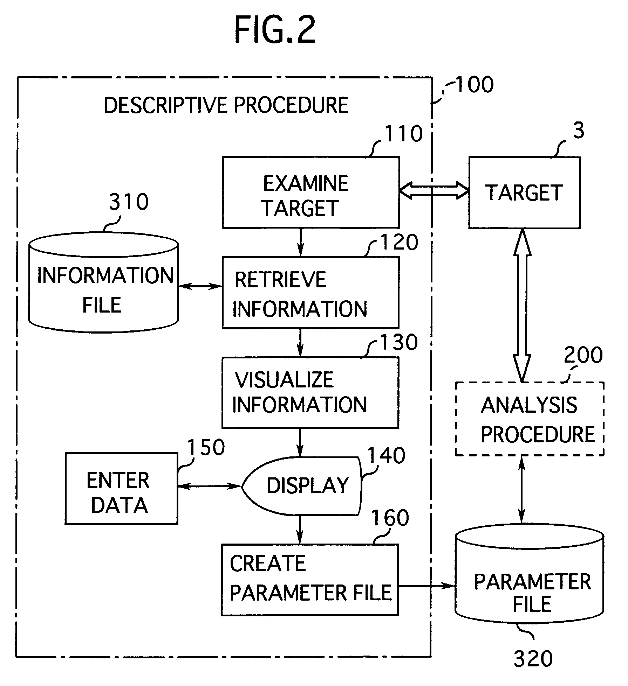

FIG. 2 shows an overall outline flow of the processes performed by executing the program 20 in the electronic circuit analysis apparatus according to the present invention. As shown in FIG. 2, the program 20 comprises a descriptive procedure 100 and an analysis procedure 200. The descriptive procedure 100 is designed to provide a parameter file 320 having parameters for the components of the target 3 in dependence on characteristics of its components. The parameter file 320 is stored in the storage device 13 of the computer 10. The electronic circuit analysis apparatus 1 may execute the descriptive procedure 100 in order to refer the information on the components of the target 3 as well as to specify the parameters for the components of the target 3. The analysis procedure 200 is designed to instruct the analysis unit 5 to set the components of the target 3 in accordance with the parameters stored in the parameter file 320 and to carry out the analysis of the target 3.

In this embodiment, there is further provided a predetermined information file 310 in the storage device 13 of the computer 10. The information file 310 has information on various components of an electronic circuit.

The descriptive procedure 100 comprises the processes 110 through 160 as shown in FIG. 2. When the descriptive procedure 100 is called, the control is passed to the process 110. In the examination process 110, the computer 10 instructs the analysis unit 5 to examine the target 3 to detect the components of the target 3, and obtains the information on the configuration of the target 3. In the retrieving process 120, the computer 10 retrieves the information concerning the components detected in the examination process 110 from the information file 310. In the visualization process 130, the computer 10 graphically visualizes the information including parameters for each component. In the display process 140, the computer 10 displays the visualized information on the screen of the display unit 15. In the data entry process 150, the computer 10 allows the operator to interactively enter data from the console 17 into the computer 10 to specify the parameters based on the information displayed on the screen of the display unit 15. In the file create process 160, the computer 10 creates the parameter file 320 in accordance with the specified parameters. The parameter file 320 includes first and second parameter files 320a and 320b in this embodiment. The first parameter file 320a contains information concerning the CPU 30 of the target 3. The second parameter file 320b contains information concerning an address map representing the assignment of the target area of the storage device 52 of the analysis unit 5. In this embodiment, the first and second parameter files 320a and 320b are described in the format of a text file, i.e. an ASCII file.

It will be understood from the following detailed descriptions that the electronic circuit analysis apparatus 1 executes the program 20 how to perform the descriptive procedure 100.

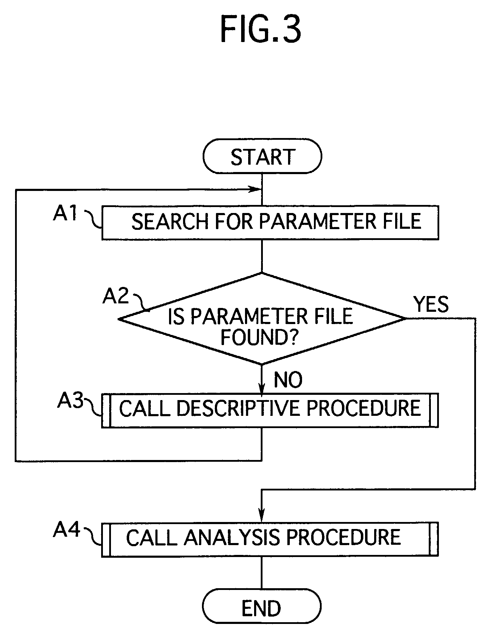

The program 20 is executed by the processing unit 11 of the computer 10 to start a main routine comprising the steps A1 to A4 shown in FIG. 3. In the step A1, the storage device 13 of the computer 10 is searched for the parameter file 320. In the step A2, a judgment is made upon whether the parameter file 320 is found within the storage device 13 of the computer 10 or not. If the answer in the step A2 is in the negative "No", the step A2 leads to the step A3 in which the descriptive procedure 100 is called. If the answer in the step A2 is in the affirmative "YES", the step A2 leads to the step A4 in which the analysis procedure 200 is called. When the control is returned from the descriptive procedure 100 to the main routine, the control is further returned from the step A3 to the step A1. When the control is returned from the analysis procedure 200 to the main routine, the main routine of the program 20 is terminated.

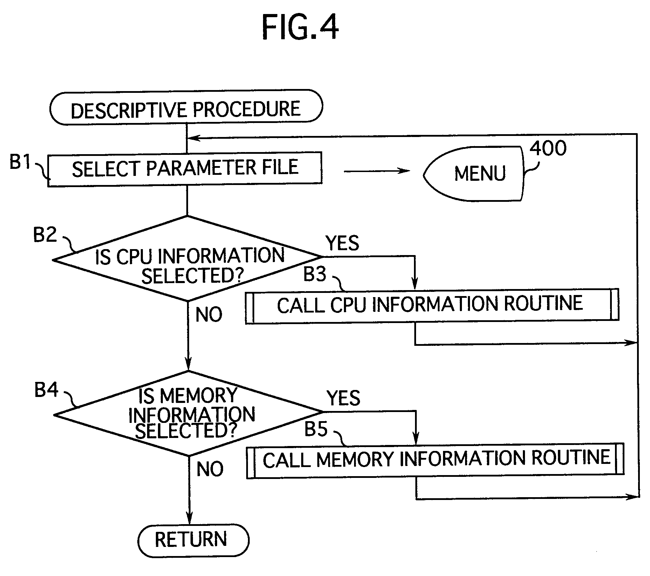

Referring to FIG. 4 of the drawings, the descriptive procedure 100 is shown as comprising the steps B1 through B5. In the step B1, the display unit 15 of the computer 10 displays a menu display window 400 on its screen, so that the operator can select one from among items including CPU information on the CPU 30 of the target 3, and memory information on the address map of the storage device 52 of the analysis unit 5.

In the step B2, a judgement is made upon whether the CPU information is selected or not. If the answer in the step B2 is in the affirmative "YES", the step B2 leads to the step B3 in which a CPU information routine is called. If the answer in the step B2 is in the negative "NO", the step B2 leads to the step B4 in which a judgement is made upon whether the memory information is selected or not. If the answer in the step B4 is in the affirmative "YES", the step B4 leads to the step B5 in which a memory information routine is called. If the answer in the step B4 is in negative "NO", the control is returned to the main routine.

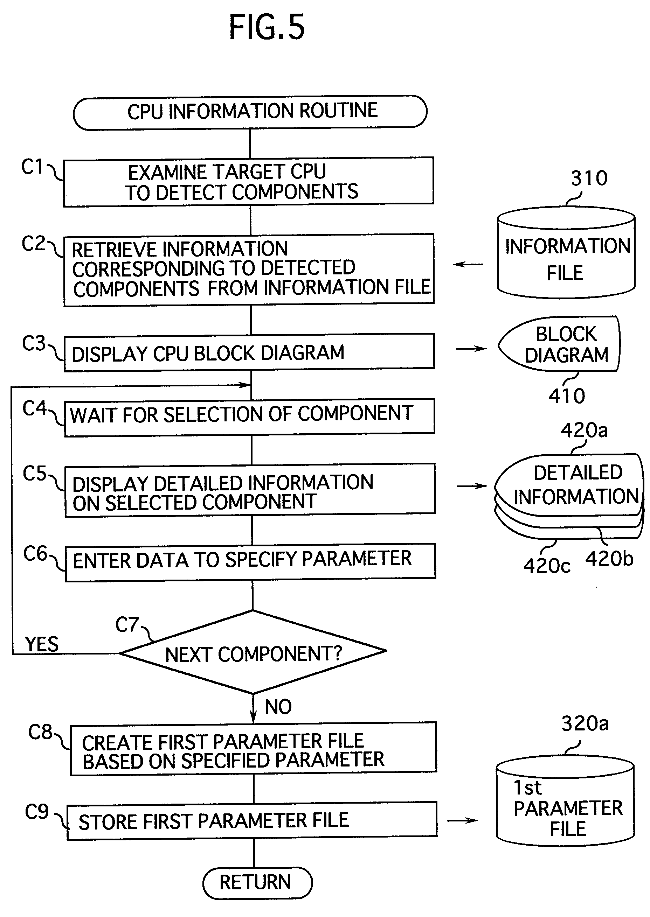

Referring to FIG. 5 of the drawings, the CPU information routine comprises the steps C1 to C9 which will be described hereinafter. When the CPU information routine is called in the step B3 of the descriptive procedure 100 in FIG. 4, the CPU information routine shown in FIG. 5 starts.

In the step C1, the target 3 is examined especially regarding the configuration of the CPU 30 of the target 3 to detect the components of the CPU 30 of the target 3. In the step C2, the information concerning the components detected in the step C1 is retrieved from the information file 310 stored in the storage device 13 of the computer 10. In the step C3, the display unit 15 of the computer 10 displays a CPU block diagram window 410 shown in FIG. 6 on its screen based on the retrieved information. Each of the components of the target 3 is designated on the CPU block diagram window 410 as a graphic symbol. Accordingly, the operator can select at least one from among the graphic symbols shown in the CPU block diagram window 410 to specify the component of the target 3, so that the display unit 15 of the computer 10 can display the detailed information concerning the specified component of the target 3 on its screen.

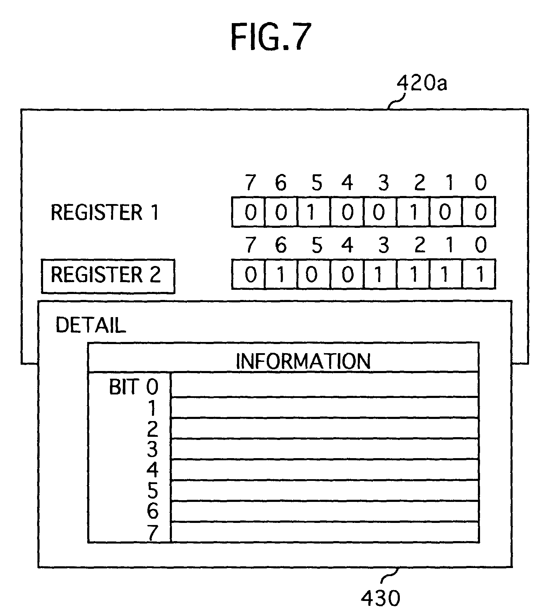

In the step C4, the computer 10 is on wait condition until the operator selects the graphic symbol corresponding to the component of the target 3. When the graphic symbol on the CPU block diagram window 410 is selected by the operator, the step C4 leads to the step C5. In the step C5, the display unit 15 of the computer 10 displays one of detailed information list windows 420a, 420b and 420c corresponding to the component of the target 3 selected in the step C4 on its screen. For instance, the detailed information list window 420a shown in FIG. 7 indicates the contents of the registers of the selected component of the target 3. The detailed information list window 420a may include more detailed information list windows 430 each including information on the definition of bits of each register. When the operator selects one from the registers on the detailed information list window 420a, the display unit 15 of the computer 10 displays one of the more detailed information fist windows 430 corresponding to the register selected by the operator. As a result, the operator can set the bits of each register without the especial knowledge of the registers.

Referring to the detailed information list window 420a, the detailed information list window 420a has cells corresponding to the bits of each register. The operator enters data into the cells of the detailed information list window 420a to specify the contents of each register of the component of the target 3 in the step C6. When the data entry on the detailed information list window 420a is completed, the step C6 leads to the step C7. In the step C7, a judgement is made upon whether the other components of the target 3 are required to display the detailed information list windows 420b and 420c or not. If the answer in the step C7 is in the affirmative "YES", the control is returned from the step C7 to the step C4. If the answer in the step C7 is in the negative "NO", the step C7 leads to the step C8 in which the first parameter file 320a is created based on the specified parameters in the above step C6. In the following step C9, the first parameter file 320a is stored in the storage device 13 of the computer 10. Then, the control is returned to the descriptive procedure 100.

In the aforementioned CPU information routine, the specification of the parameters of the INTRC 34 and the SIOC 38 of the target 3 will be described below. The INTRC 34 has a first interrupt referred to as "INT0", a second interrupt referred to as "INT1" and a third interrupt referred to as "INT2". The INTRC 34 further has a register including bits utilized for determining whether each interrupt is enabled or disabled and how each interrupt is detected. The INTRC 34 controls the interrupts based on the information on the bits of the register. The SIOC 38 also has a register having bits utilized for determining the type of the interface and the baud rate. In this embodiment, the INT0 of the INTRC 34 is enabled and detected in response to the edge of input. The INT1 of the INTRC 34 is disabled. The INT2 of the INTRC 34 is enabled and is detected in response to the level of input. The baud rate of the SIOC 38 is set to 9600bps. The type of the interface of the SIOC 38 is defined as the RS-232C interface.

When the operator selects the graphical symbols of the INTRC 34 and the SIOC 38, the display unit 15 of the computer 10 displays the detailed information windows 420a and 420b concerning the INTRC34 and the SIOC 38, respectively. On the detailed information windows 420a and 420b, the operator enters data into the cells to specify the above information on the contents of the registers of the INTRC 34 and the SIOC 38. The parameters for the CPU 30 of the target 3 are thus defined, so that the first parameter file 320a having a file name of "CPU.INI" is created as described below.
(INTRC)
INT0 = yes, edge
INT1 = no
INT2 = yes, level
(SIOC)
brate = 9600bps, 8bit, on

The first parameter file 320a thus created in the CPU information routine is stored in a predetermined directory in the storage device 13 of the computer 10. The analysis procedure 200 is executed by the use of the first parameter file 320a to initialize the CPU 30 of the target 3.

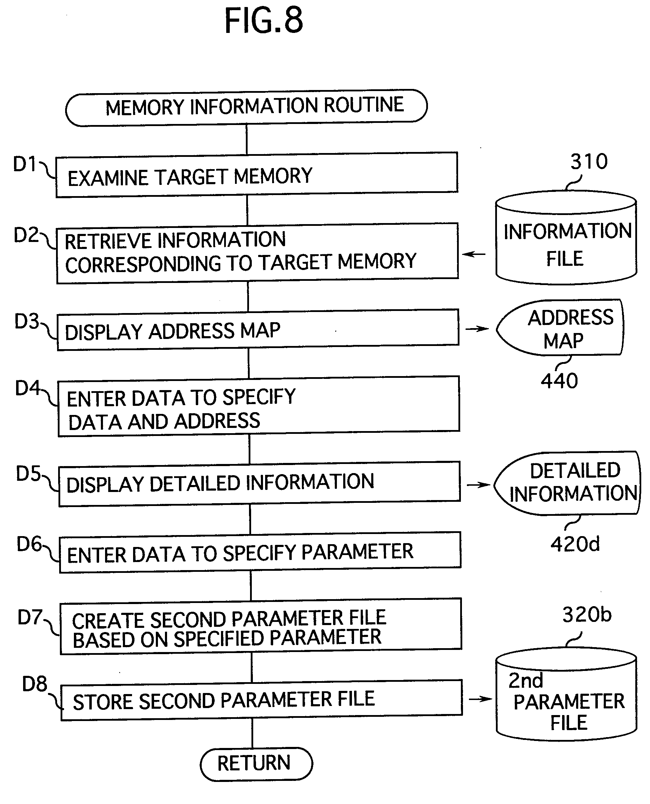

Referring to FIG. 8 of the drawings, the memory information routine comprises the steps D1 to D8 which will be described hereinafter. When the memory information routine is called in the step B5 of the descriptive procedure 100 shown in FIG. 4, the memory information routine starts.

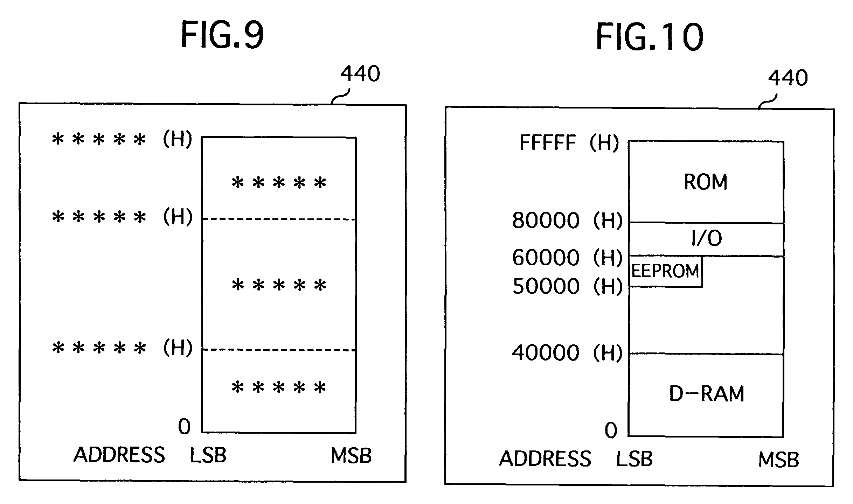

In the step D1, the target 3 is examined especially regarding the storage devices of the target 3, i.e., the ROM 42, the D-RAM 44, the EEPROM 46 and the I/O 48. In the step D2, the information concerning the storage devices of the target 3 is retrieved from the information file 310 stored in the storage device 13 of the computer 10. In the step D3, the display unit 15 of the computer 10 displays an address map window 440 shown in FIG. 9 on its screen. In the address map window 440 in FIG. 9, the address map of the storage device 52 of the analysis unit 5 has blank cells, so that the operator can enter data into the cells to specify the addresses for each storage device of the target 3 in the address map.

Referring to FIG. 10 of the drawings, there is shown an example of the address map after the operator enters data into the cells in the address map window 440. In the address map window 440 shown in FIG. 10, the assignment of the storage device 52 of the analysis unit 5 is defined as follows:

The ROM 42 of the target 3 is assigned to a range of from 80000(H) to FFFFF(H).

The D-RAM 44 of the target 3 is assigned to a range of from 0(H) to 3FFFF(F).

The EEPROM 46 of the target 3 is assigned to a range of from 50000(H) to 5FFFF(H) in the even bytes.

The I/O 48 of the target 3 is assigned to a range of from 60000(H) to 7FFFF(H).

When the data entry on the address map window 440 is completed in the step D4, the step D4 leads to the step D5. In the step D5, the display unit 15 of the computer 10 displays a detailed information fist window 420d on its screen. The detailed information list window 420d represents the information on, for instance, the access times for the ROM 42 and D-RAM 44 of the target 3. In the step D6, the operator enters data into the computer 10 to specify the parameters for each component of the target 3. When the data entry on the detailed information list window 420d is completed, the control proceeds the step D7.

In the step D7, the second parameter file 320b is created based on the parameters specified in the above steps D4 and D6. In the following step D8, the second parameter file 320b is stored in a predetermined directory in the storage device 13 of the computer 10. Then, the control is returned to the descriptive procedure 100.

In this embodiment, the parameters of the ROM 42 of the target 3 and D-RAM 44 of the target 3 are specified as described hereinlater. When the CPU 30 has a bus cycle time of 50ns and no waiting time, the D-RAM 44 of the target 3 has an access time of 20ns and no waiting time and the ROM 42 of the target 3 has an access time of 100ns and 2 waiting times. The parameters for the ROM 42 and D-RAM 44 of the target 3 are thus defined, so that the second parameter file 320b having a file name of "TARGET.INI" is described as follows:
(RAM)
WAIT = 0, 0-3FFFF
(ROM)
WAIT = 2, 80000-FFFFF

The second parameter file 320b thus created is utilized for specifying the assignment of the storage device 52 of the analysis unit 5 and initializing the storage device 52 of the analysis unit 5 and the storage devices of the target 3.

The preferred embodiment of the electronic circuit analysis apparatus has an advantage over the prior art apparatus in the preparations for performing the analysis of the electronic circuit having the extremely complex structural components, because of the fact that information on the complex structural components of the electronic circuit are obtained by the examination means and graphically visualized and displayed on the screen of the display unit. The operator specifies parameters for each component of the electronic circuit in accordance with the visualized information, so that the electronic circuit analysis apparatus and the electronic circuit can be initialized. Accordingly, the operator can handle the electronic circuit analysis apparatus without especial skill in the art. Furthermore, it takes a short time to prepare for the analysis of the electronic circuit without special effort.

The many features and advantages of the invention are apparent from the detailed specifications, and thus it is intended by the appended claims to cover all such features and advantages of the invention which fail within the true spirit and scope thereof. Further, since numerous modifications and changes will readily occur to those skilled in the art, it is not desired to limit the invention to the exact construction and operation illustrated and described herein, and accordingly, all suitable modifications and equivalents may be construed as being encompassed within the scope of the invention.

## Claims

1. An electronic circuit analysis apparatus (1) for analyzing an electronic circuit (3) having a plurality of components (30, 32, 34, 36, 38, 40, 42, 44, 46, 48), comprising:
examination means (10, 5) for examining said electronic circuit (3) to detect said components (30, 32, 34, 36, 38, 40, 42, 44, 46, 48) of said electronic circuit (3); and
visualization means (10, 15) for graphically visualizing information on the configuration of said electronic circuit (3) in accordance with the components (30, 32, 34, 36, 38, 40, 42, 44, 46, 48) detected by said examination means (10, 5).

2. An electronic circuit analysis apparatus (1) as set forth in claim 1, further comprising:
a storage device (13) storing therein a predetermined information file (310) including information on various components of an electronic circuit; and
means (10, 11) for retrieving information concerning the components (30, 32, 34, 36, 38, 40, 42, 44, 46, 48) detected by said examination means (10, 5) from said information file (310).

3. An electronic circuit analysis apparatus (1) as set forth in claim 1, in which said visualization means (10, 15) comprises a display unit (15) for displaying said information on its screen, and said information on the screen of said display unit (15) being represented by a block diagram (410, 440) showing the configuration of said electronic circuit (3) based on the components (30, 32, 34, 36, 38, 40, 42, 44, 46, 48) detected by said examination means (10, 5) and further represented by detailed information lists (420a, 420b, 420c, 420d, 430) indicating detailed information on said components (30, 32, 34, 36, 38, 40, 42, 44, 46, 48) of said electronic circuit (3).

4. An electronic circuit analysis apparatus (1) as set forth in claim 3, in which said block diagram (410) has graphic symbols representing the components (30, 32, 34, 36, 38, 40, 42, 44, 46, 48) detected by said examination means (10, 5), said apparatus (1) further comprising interactive operation means (10, 15, 17) for allowing an operator to select at least one from among said graphic symbols shown in said block diagram (410) to set the component (30, 32, 34, 36, 38, 40, 42, 44, 46, 48) corresponding to the selected graphic symbol, and said display unit (15) displaying said detailed information list (420a, 420b, 420c, 420d, 430) which indicates said detailed information on the (30, 32, 34, 36, 38, 40, 42, 44, 46, 48) of said electronic circuit (3) corresponding to the graphic symbol selected by the operator.

5. An electronic circuit analysis apparatus (1) as set forth in claim 3, further comprises a storage device (52) having a target area assigned to said components (42, 44, 46, 48) of said electronic circuit (3), said information on the screen of said display unit (15) being represented by an address map (440) showing the assignment of said storage device (52), and said apparatus (1) further comprising interactive operation means (10, 15, 17) for allowing an operator to define addresses corresponding to the components (42, 44, 46, 48) detected by the examination means (10, 5) in accordance with said address map (440).

6. An electronic circuit analysis apparatus (1) as set forth in claim 3, in which said detailed information lists (420a, 420b, 420c, 430) represent contents of registers corresponding to the components (30, 32, 34, 36, 38, 40) detected by the examination means (10, 5).

7. An electronic circuit analysis apparatus (1) as set forth in claim 1, further comprising a general purpose computer (10) and an analysis unit (5) interposed between said computer (10) and said electronic circuit (3), said computer (10) being operable to directly control said analysis unit (5) and control said electronic circuit (3) by way of said analysis unit (5).

8. An electronic circuit analysis apparatus (1) as set forth in claim 7, in which said analysis unit (5) is an in-circuit emulator.

9. An electronic circuit analysis apparatus (1) as set forth in claim 7, in which said analysis unit (5) is a ROM debugger.

10. An electronic circuit analysis method of analyzing an electronic circuit (3) having a plurality of components (30, 32, 34, 36, 38, 40, 42, 44, 46, 48), comprising the steps of:
(a) examining said electronic circuit (3) to detect said components (30, 32, 34, 36, 38, 40, 42, 44, 46, 48) of said electronic circuit (3); and
(b) graphically visualizing information on the configuration of said electronic circuit (3) in accordance with the components (30, 32, 34, 36, 38, 40, 42, 44, 46, 48) detected in the step (a).

11. An electronic circuit analysis method as set forth in claim 10, further comprises the step of preparing a predetermined information file (310) including information on various components of an electronic circuit; and the step (b) comprising the step of retrieving information concerning the components (30, 32, 34, 36, 38, 40, 42, 44, 46, 48) detected in the step (a) from said information file (310).

12. An electronic circuit analysis method as set forth in claim 10, further comprising the steps of:
(c) displaying a block diagram (410, 440) showing said configuration of said electronic circuit (3), said block diagram (410, 440) having graphic symbols representing the components (30, 32, 34, 36, 38, 40, 42, 44, 46, 48) detected in the step (a);
(d) allowing an operator to select at least one from among said graphic symbols shown in said block diagram (410, 440);
(e) displaying a detailed information fist (420a, 420b, 420c, 420d, 430) indicating detailed information on the component (30, 32, 34, 36, 38, 40, 42, 44, 46, 48) of said electronic circuit (3) corresponding to the graphic symbol selected by the operator in the step (d); and
(f) allowing the operator to set the component (30, 32, 34, 36, 38, 40, 42, 44, 46, 48) corresponding to the selected graphic symbol in accordance with said detailed information list (420a, 420b, 420c, 420d, 430).

13. An electronic circuit analysis method as set forth in claim 12, in which said detailed information lists (420a, 420b, 420c, 430) represent contents of registers corresponding to the components (30, 32, 34, 36, 38, 40) of said electronic circuit (3).

14. An electronic circuit analysis method as set forth in claim 10, further comprising the steps of:
preparing a storage device (52) having a target area assigned to said components (42, 44, 46, 48) of said electronic circuit (3);
displaying an address map (440) showing the assignment of said target area of said storage device (52); and
allowing an operator to define addresses corresponding to the components (42, 44, 46, 48) detected in the step (a) in accordance with said address map (440).

15. A storage device storing therein an electronic circuit analysis program (20) executed by a computer (10) to perform a method of analyzing an electronic circuit (3), said method comprising the steps of:
(a) examining said electronic circuit (3) to detect said components (30, 32, 34, 36, 38, 40, 42, 44, 46, 48) of said electronic circuit (3); and
(b) graphically visualizing information on the configuration of said electronic circuit (3) in accordance with the components (30, 32, 34, 36, 38, 40, 42, 44, 46, 48) detected in the step (a).

16. A storage device as set forth in claim 15, further storing therein a predetermined information file (310) including information on various components of an electronic circuit, and the step (b) of said method comprising the step of retrieving information concerning the components (30, 32, 34, 36, 38, 40, 42, 44, 46, 48) detected in the step (a) from said information file (310).

17. A storage device as set forth in claim 15, in which said method further comprises the steps of:
(c) displaying a block diagram (410, 440) showing said configuration of said electronic circuit (3), said block diagram (410, 440) having graphic symbols representing the components (30, 32, 34, 36, 38, 40, 42, 44, 46, 48) detected in the step (a);
(d) allowing an operator to select at least one from among said graphic symbols shown in said block diagram (410, 440);
(e) displaying a detailed information list (420a, 420b, 420c, 420d, 430) indicating detailed information on the component (30, 32, 34, 36, 38, 40, 42, 44, 46, 48) of said electronic circuit (3) corresponding to the graphic symbol selected by the operator in the step (d); and
(f) allowing the operator to set the component (30, 32, 34, 36, 38, 40, 42, 44, 46, 48) corresponding to the selected graphic symbol in accordance with said detailed information list (420a, 420b, 420c, 420d, 430).

18. A storage device as set forth in claim 17, in which said detailed information lists (420a, 420b, 420c, 430) represent contents of registers corresponding to the components (30, 32, 34, 36, 38, 40) of said electronic circuit (3).

19. A storage device as set forth in claim 15, in which said computer (10) is connected to a storage device (52) having a target area assigned to said components (42, 44, 46, 48) of said electronic circuit (3), said method further comprises the steps of:
displaying an address map (440) showing the assignment of said target area of said storage device (52); and
allowing the operator to define addresses corresponding to the components (42, 44, 46, 48) detected in the step (a) in accordance with said address map (440).
